# EUROPÄISCHE PATENTSCHRIFT

(11) **EP 2 401 175 B1**
(45) Veröffentlichungstag und Bekanntmachung des Hinweises auf die Patenterteilung: **11.06.2014**
(21) Anmeldenummer: 10705288.8
(22) Anmeldetag: 16.02.2010
(51) Int. Cl.: B60N 2/68, B60N 2/22, B60N 2/427, B60N 2/36, B60N 2/015

(54) **SITZ FÜR EIN KRAFTFAHRZEUG**
SEAT FOR A MOTOR VEHICLE
SIÈGE POUR VÉHICULE À MOTEUR

(30) Priorität: 26.02.2009 DE 102009010648
(43) Veröffentlichungstag der Anmeldung: 04.01.2012
(73) Patentinhaber: Bayerische Motoren Werke Aktiengesellschaft, 80809 München (DE)
(72) Erfinder: LENEIS, Thomas, 85669 Reithofen (DE); MUELLER, Andreas, 84079 Bruckberg (DE)
(86) Internationale Anmeldenummer: PCT/EP2010/000931
(87) Internationale Veröffentlichungsnummer: WO 2010/097170

(56) Entgegenhaltungen:
- DE-A1- 10 036 848
- DE-A1-102008 018 059
- DE-B- 1 023 347
- DE-U1- 29 614 633
- FR-A1- 2 745 244
- JP-A- 2004 155 239
- US-A1- 2005 082 865
- US-A1- 2005 082 896

## Beschreibung

Die Erfindung betrifft einen Sitz für ein Kraftfahrzeug gemäß dem Oberbegriff des Anspruchs 1.

Es ist bereits ein Sitz für ein Kraftfahrzeug bekannt, der ein Sitzteil und eine Rückenlehne aufweist, wobei der Sitz als ein Rücksitz in zweiter Sitzreihe in einem Fahrzeuginnenraum angeordnet ist. Die Rückenlehne ist über einen oberen Abschnitt, der zu einem Kofferraum gewandt ist, an einem Querträger der Karosserie befestigt. Ein unterer Abschnitt der Rückenlehne ist mit einem unteren Abschnitt an einem Boden der Karosserie befestigt.

Aus der US 2005/0082896 A1 ist bereits ein Sitz für ein Kraftfahrzeug bekannt. Die Befestigung eines oberen Abschnittes der bekannten Rückenlehne erfolgt zum einem über einen in etwa senkrecht verlaufenden Bolzen, der zwischen zwei Halterungsteilen an der Rückenlehne befestigt ist und zum anderen über einen zurückschwenkbaren Sperrhebel, der an einem Karosseriebauteil befestigt ist. In einer Verriegelungsposition umgreift der Sperrhebel den Verriegelungsbolzen über einen vorbestimmten Winkelbereich.

Aus der DE 296 14 633 U1 ist eine Befestigungsvorrichtung für eine umlegbare Rückenlehne an einem Kraftfahrzeug bekannt. Zur Verstellung der Neigung der Rückenlehne ist ein karosserieseitiges Gegenschließteil auf einer um die Schwenkachse der Rückenlehne verlaufenden Bogenführung bewegbar und mittels einer am Gegenschließteil angreifenden Arretierspindel in seiner jeweiligen Stellung fixierbar. Die Arretierspindel ist gegenüber einer karosseriefesten Sperreinrichtung axial verlagerbar und festlegbar. Das karosserieseitige Gegenschließteil ist als eine U-förmige Schlaufe, ausgebildet. Ein lehnenseitiges Schließteil ist als ein Drehfallen-Verschluß ausgebildet. Eine Sperrklinke des Drehfallen-Verschlusses kann über eine Betätigungsvorrichtung freigegeben werden, so dass die Sperrklinke in die vorgesehene Stellung bewegbar ist.

Aus der DE 10 2008 018059 A1 ist eine Sitz eines Kraftfahrzeuges mit einem Sitzteil und einer Rückenlehne bekannt. Die Rückenlehne weist ein Strukturglied auf, das mit der Rückwand der Rückenlehne verbunden ist, um das Gewicht von auf dem Sitz befindlichen Personen über die Rückenlehne auf die Karosserie des Fahrzeuges zu übertragen.

Aus der DE 100 36 848 A1 ist eine Rückenlehne eines Fahrzeugsitzes bekannt, wobei zwischen der Rückenlehne und einem Fahrzeugaufbau ein Energieaufnahmeelement vorgesehen ist. Das Energieaufnahmeelement ist an einem unteren Ende einer jeweiligen Rückenlehne angeordnet und weist ein Wellenprofil auf, das bei einer Beaufschlagung der Rückenlehne plastisch verformbar ist.

Aus der FR 2 745 244 A1 ist ein umklappbarer Rücksitz bekannt, bei dem eine Rückenlehne an ihrem oberen, seitlichen Ende einen verschwenkbaren Verriegelungshebel aufweist, der in einer Verriegelungsposition einen karosserieseitigen Verriegelungsstift umgreift. Der karosserieseitige Verriegelungsstift ist mit seinem einen Ende an der Karosserie angeordnet und weist ein freies Ende auf, das von der Karosserie in Richtung der Rückenlehne absteht. Durch ein Verschwenken des Verriegelungshebels aus der Verriegelungsposition in eine Entriegelungsposition wird der Stift freigegeben und die Rückenlehne kann aus der verriegelten Position nach unten in Richtung eines Sitzteiles geklappt werden.

Aus der US 2005/082865 A1 ist ein Rücksitz mit einer klappbaren Rückenlehne bekannt. Die Rückenlehne weist an mindestens einem seitlichen, oberen Abschnitt ein Drehfallenschloss auf, das in Verbindung mit einem karosserieseitigen Verriegelungsbolzen bringbar ist. Durch eine manuelle Betätigung ist die Rückenlehne aus der verriegelten Sitzposition entriegelbar und nach unten auf das Sitzteil verschwenkbar, so dass eine Rückseite der Rückenlehne als Ablagefläche nutzbar ist.

Aus der JP-155239 A ist ein Rücksitz für ein Kraftfahrzeug bekannt, wobei der Rücksitz eine Rückenlehne aufweist. Die Befestigung eines oberen Abschnittes der bekannten Rückenlehne erfolgt über mindestens eine an der Rückenlehne angeordnete hakenförmige Halterungsvorrichtung und über eine Durchgangsöffnung, die an einem an der Karosserie angeordneten Bauteil ausgebildet ist. Im Verriegelungszustand greift die jeweilige hakenförmige Halterungsvorrichtung formschlüssig in die jeweilige dazu gegenüberliegende Durchgangsöffnung ein.

Die jeweilige Halterungsvorrichtung ist in einer Ansicht von der Seite hakenförmig, in einer Ansicht von oben U-förmig und in einer Ansicht von vorne U-förmig. Die jeweilige Halterungsvorrichtung ist aus einem drahtförmigen Material gebildet, das in der Ansicht von oben aus zwei parallel zueinander verlaufenden Abschnitten besteht und in der Ansicht von vorne einen nach unten abgewinkelten, schlaufenförmigen Abschnitt aufweist.

Bei einer Krafteinwirkung auf die Rückseite der Rückenlehne, beispielsweise durch einen im Kofferraum befindlichen Gegenatand bei einem Auffahrunfall, wird die einwirkende Kraft teilweise durch die vorhandene Anzahl der miteinander in Eingriff stehenden Halterungsvorrichtungen und Durchgangsöffnungen an der Rückenlehne aufgefangen.

Der nach unten abgewinkelte, schlaufenförmige Abschnitt der jeweiligen Halterungsvorrichtung verformt sich jedoch ab einer bestimmten Höhe der auf die miteinander in Eingriff stehenden Halterungsvorrichtungen einwrkenden Kraft nach oben, so dass es zu einem Herausrutschen des abgewinkelten, schlaufenförmigen Abschnittes der jeweiligen Halterungsvorrichtung aus der betreffenden Durchgangsöffnung kommen kann.

Aus der DE 1023347 B ist ein Rücksitz für ein Kraftfahrzeug bekannt, wobei der Rücksitz eine Rückenlehne und ein Sitzkissen aufweist. Das Sitzkissen weist einen unteren, in Fahrtrichtung gesehen, vorderen Rahmen auf, an dem mindestens ein Drahtbügel befestigt ist. An dem Drahtbügel ist ein, in Fahrtrichtung gesehen, nach hinten vorstehender U-förmiger Abschnitt ausgebildet. In der eingebauten Position des Sitzkissens steht der jeweilige U-förmige Abschnitt des Drahtbügels in Eingriff mit jeweils einem am Bodenblech der Karosserie befestigten Verriegelungsteil.

Das jeweilige Verriegelungsteil weist zur Erleichterung des Einfädelns des jeweiligen U-förmigen Abschnittes des Drahtbügels eines ausgebauten Sitzkissens auf das jeweilige Verriegelungsteil eine verlängerte Schrägfläche auf. Die verlängerte Schrägfläche ist nach hinten und nach unten geneigt. An das in Fahrtrichtung gesehen, hintere Ende der verlängerten Schrägfläche schließt sich ein, in Fahrtrichtung gesehen, nach vorne verlaufender, geneigter Abschnitt an. An den, vom hinteren Ende der verlängerten Schrägfläche aus, in Fahrtrichtung gesehen, nach vorne verlaufenden, geneigten Abschnitt folgt ein senkrechter Abschnitt, der mit einem waagrecht verlaufenden Flansch verbunden ist.

Im verriegelten Zustand liegt ein Verbindungssteg des jeweiligen U-förmigen Abschnittes des Drahtbügels an dem senkrechten Abschnitt des Verriegelungsteils an. Durch den darüber befindlichen geneigten Abschnitt des Verriegelungsteils wird verhindert, dass sich bei einem Unfall das Sitzkissen in der eingebauten Position, in Fahrtrichtung gesehen, nach vorne und nach oben bewegt.

Aufgabe der Erfindung ist es, einen Sitz für ein Kraftfahrzeug zu schaffen, der einen einfachen Aufbau hat.

Diese Aufgabe wird durch die Merkmale des Anspruchs 1 gelöst.

Ein erfindungsgemäßer Sitz für ein Kraftfahrzeug weist eine Rückenlehne und ein Sitzteil auf. Eine Rückseite der Rückenlehne ist an Bauteilen der Karosserie befestigt, die in Fahrzeugquerrichtung y verlaufen. Die Rückenlehne ist mit einer Schicht versehen, die für den Sitzkomfort dient. Diese Schicht für den Sitzkomfort ist an einem Strukturbauteil angeordnet. An das Strukturbauteil schließt sich ein Flächenbauteil an, das ein Energieabsorptionsbauteil aufweist. Das Flächenbauteil erstreckt sich im Wesentlichen über die Rückseite der Rückenlehne.

Die Befestigung der Rückenlehne an den in Fahrzeugquerrichtung y verlaufenden Bauteilen erfolgt vorteilhafterweise über mindestens ein oberes Lager und mindestens eine untere Befestigung. Durch den erfindungsgemäßen Sitz wird eine hohe Crash- und Verriegelungssicherheit erreicht. Ferner ergibt sich durch die Verwendung einfacher Montageteile eine einfache Montage und Demontage der Rückenlehne. Dadurch ist auch der Montageprozess schneller und kostengünstig durchzuführen. Außerdem weist der erfindungsgemäße Sitz ein geringeres Gewicht auf.

In einer vorteilhaften Ausführungsform ist die untere Befestigung ein Befestigungsmittel, das an der Rückenlehne und an einem Bodenblech der Karosserie befestigt ist.

Das obere Lager besteht vorteilhafterweise aus einem schlaufenförmigen Befestigungsmittel und aus einem hakenförmigen Befestigungsmittel, die im montierten Zustand der Rückenlehne an der Karosserie formschlüssig miteinander in Eingriff stehen.

Das schlaufenförmige Befestigungsmittel weist in einer vorteilhaften Ausführungsform ein U-förmiges oder rechteckförmiges Profil auf.

Das hakenförmige Befestigungsmittel hat vorteilhafterweise einen plattenförmigen Abschnitt, an dem ein im Querschnitt U-förmiger Abschnitt ausgebildet ist.

In einer vorteilhaften Ausführungsform ist zwischen dem plattenförmigen Abschnitt und dem im Querschnitt U-förmigen Abschnitt ein Übergang ausgebildet.

Der Übergang weist vorteilhafterweise zwei seitliche Ausnehmungen auf, in denen sich Abschnitte des U-förmigen Profils bei einer Verformung des schlaufenförmigen Befestigungsmittels formschlüssig anlegen.

Das in Fahrzeugquerrichtung y verlaufende Karosseriebauteil ist in einer vorteilhaften Ausführungsform ein oberer Querträger.

An dem im Querschnitt U-förmigen Abschnitt des Befestigungsmittels ist vorteilhafterweise ein freies Ende ausgebildet, das zur Sicherstellung der richtigen Montage dient.

Eine Ausführungsform der Erfindung wird nachstehend anhand der Zeichnungen beispielshalber beschrieben. Dabei zeigen:
- Fig. 1: eine Schnittansicht eines schematisch dargestellten Sitzes, der in einem Fahrzeuginnenraum vor einem Kofferraum angeordnet ist,
- Fig. 2: eine perspektivische Ansicht von vorne auf den in der Fig. 1 dargestellten Sitz,
- Fig. 3: eine perspektivische Ansicht von vorne, die die Strukturbauteile des in den vorhergehenden Figuren gezeigten Sitzes zeigt,
- Fig. 4: eine perspektivische Ansicht auf eine in den Kofferraum zeigende Rückseite des Strukturbauteils der Rückenlehne,
- Fig. 5: eine perspektivische Ansicht einer vergrößerten Darstellung von zwei Befestigungsstellen, die an einem oberen Bereich an der Rückseite des Strukturbauteils der Rückenlehne sichtbar sind,
- Fig. 6: eine Schnittdarstellung des oberen Abschnittes der Rückenlehne, wobei in ein schlaufenförmiges Befestigungselement, das an der Rückenlehne angeordnet ist, ein hakenförmiges Befestigungselement eingreift, das an einem Bauteil der Karosserie befestigt ist,
- Fig. 7 und 8: jeweils eine perspektivische Ansicht des in der Fig. 6 gezeigten hakenförmigen Befestigungsbauteils,
- Fig. 9: eine Ansicht von oben, die schematisch das hakenförmige Befestigungsteil in Eingriff mit dem schlaufenförmigen Befestigungsteil in einem nicht verformten Zustand zeigt und
- Fig. 10: eine Ansicht von oben, die das schlaufenförmige Befestigungsteil in Eingriff mit dem hakenförmigen Befestigungsbauteil nach einem Verformungsvorgang aufgrund einer Krafteinwirkung auf die Rückseite der Rückenlehne zeigt.

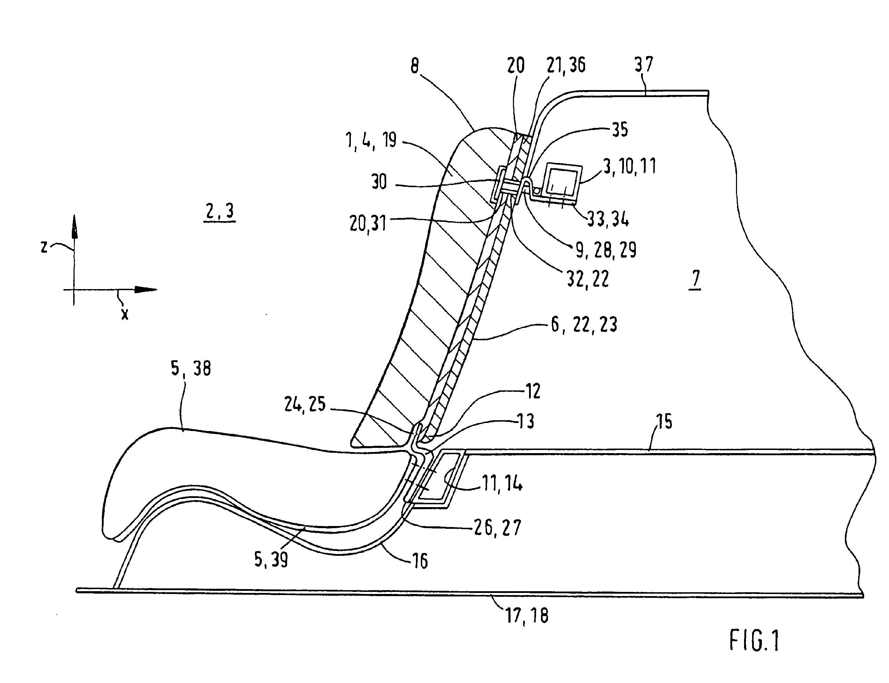

Die Fig. 1 zeigt einen Sitz oder eine Sitzbank 1, die in einem teilweise dargestellten Innenraum 2 eines Kraftfahrzeuges 3, beispielsweise einer Limousine mit einem Stufenheck, angeordnet ist. Der Sitz 1 weist eine Rückenlehne 4 sowie ein Sitzteil 5 auf. An eine Rückseite 6 der Rückenlehne 4 schließt sich ein Kofferraum 7 an. Ein oberer Abschnitt 8 der Rückenlehne 4 ist über eine Befestigungsvorrichtung 9 an einem Querträger 10 einer Karosserie 11 des Kraftfahrzeuges 3 befestigt.

In der gezeigten Ausführungsform ist ein unterer Abschnitt 12 der Rückenlehne 4 über Befestigungsmittel 13 an einem unteren Querträger 14 der Karosserie 11 befestigt. An den unteren Querträger 14 schließt sich in einer Fahrzeuglängsrichtung x ein Boden 15 des Kofferraumes 7 an. In Fahrzeuglängsrichtung x nach vorne schließt sich an den unteren Querträger 14 ein Bodenblech 16 an, an dem das Sitzteil 5 befestigt ist. Unterhalb des Bodens 15 und des Bodenbleches 16 ist ein weiteres Bodenblech 17 vorgesehen, dessen Außenfläche 18 zu einer nicht dargestellten Fahrbahn zeigt.

Die Rückenlehne 4 weist in der gezeigten Ausführungsform einen im Prinzip dreiteiligen Aufbau auf. Eine zum Fahrzeuginnenraum 2 zeigende Schicht 19 dient zur Erzeugung des Sitzkomforts und ist beispielsweise aus einem geeigneten Schaumstoff hergestellt. Die Schaumstoffschicht 19 ist an einem Strukturbauteil oder Tragbauteil 20 angeordnet, das die erforderliche Steifigkeit aufweist.

An einer zum Kofferraum 7 zeigenden Außenfläche 21 des Strukturbauteils 20 ist ein weiteres Flächenbauteil 22 angeordnet. Das Flächenbauteil 22 dient neben einer Steifigkeitserhöhung des Strukturbauteils 20 zusätzlich zur Energieabsorption eines nicht dargestellten Gegenstandes, der beispielsweise bei einem Fahrzeugunfall auf die Rückseite 6 der Rückenlehne 4 bzw. auf eine Außenfläche 23 des Flächenbauteils 22 auftrifft.

Das Befestigungsmittel 13 ist ein abgewinkeltes Bauteil, das mit einem Ende 24 an einer Vorderseite 25 des Strukturbauteils 20 befestigt ist. Ein dazu gegenüberliegendes Ende 26 des Befestigungsmittels 13 ist an einer Außenfläche 27 des unteren Querträgers 14 befestigt.

Die Befestigungsvorrichtung 9 am oberen Abschnitt 8 der Rückenlehne 4 besteht aus einem schlaufenförmigen Befestigungsmittel 28, das beispielsweise ein U-förmiges Profil 29 und eine daran angeordnete Befestigungsplatte 30 aufweist. Das U-förmige Profil 29 wird bei der Montage durch Durchgangsöffnungen 31, 32 hindurchgeführt, die in dem Strukturbauteil 20 und dem Flächenbauteil 22 ausgebildet sind.

Am oberen Querträger 10 ist ein hakenförmiges Befestigungsmittel 33 angeordnet. In der gezeigten Ausführungsform besteht das Befestigungsmittel 33 aus einem plattenförmigen Abschnitt 34 und einem im Querschnitt U-förmigen Abschnitt 35. An einem oberen Ende 36 des Strukturbauteils 20 schließt sich eine Abdeckung 37 des Kofferraums 7 an, die beispielsweise als Ablagefläche dient.

Das Sitzteil 5 weist in der gezeigten Ausführungsform einen zweiteiligen Aufbau auf, der aus einer dem Sitzkomfort dienenden Schicht 38 und einem Strukturbauteil 39 besteht.

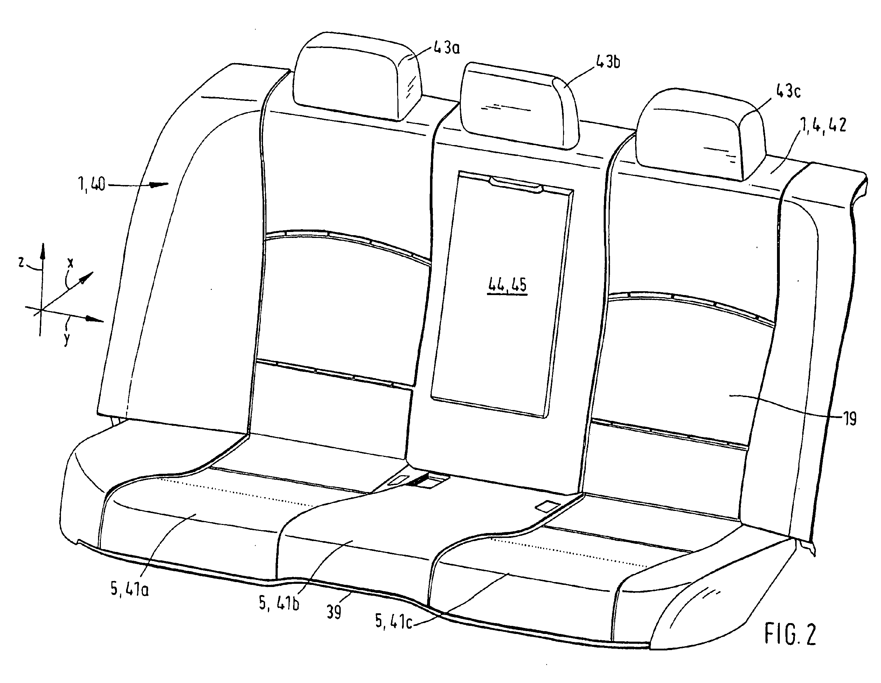

Die Fig. 2 zeigt eine perspektivische Ansicht auf eine Vorderseite 40 des Sitzes 1. Der Sitz 1 ist in der gezeigten Ausführungsform für drei Sitzplätze 41a, 41 b und 41c vorgesehen. Entsprechend sind an einer Oberseite 42 der Rückenlehne 4 drei Kopfstützen 43a, 43b und 43c vorgesehen. Unterhalb der mittleren Kopfstütze 43b ist in der Rückenlehne 4 ein Deckel 44 einer Durchladevorrichtung 45 ausgebildet.

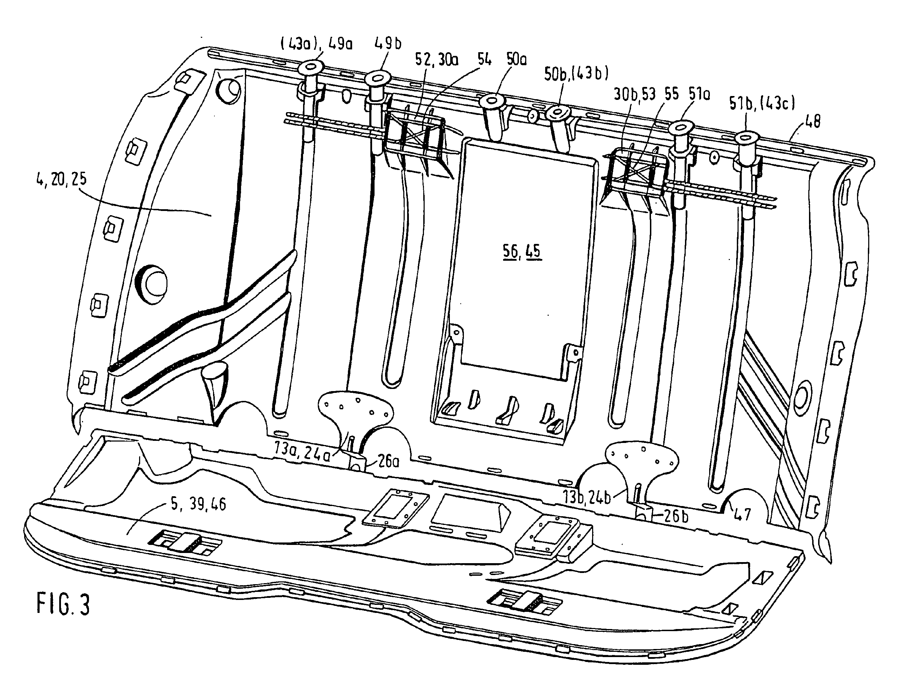

Die Fig. 3 zeigt die Vorderseite 25 des Strukturbauteils 20 der Rückenlehne 4 sowie eine Vorderseite 46 des Strukturbauteils 39 des Sitzteils 5. An einem unteren Rand 47 des Strukturbauteils 20 sind zwei Enden 24 eines jeweiligen Befestigungsmittels 13a und 13b angeordnet. Ferner ist das jeweilige, dazu gegenüberliegende Ende 26a, 26b des jeweiligen Befestigungsmittels 13a, 13b erkennbar.

An einem oberen Rand 48 des Strukturbauteils 20 sind die Aufnahmeführungen 49a, 49b; 50a, 50b und 51a, 51b für die jeweilige Kopfstütze 43a, 43b und 43c angeordnet. Zwischen den Aufnahmeführungen 49b und 50a sowie 50b und 51a ist jeweils eine Durchgangsöffnung 52 und 53 in dem Strukturbauteil 20 zur Anordnung der jeweiligen Befestigungsplatte 30a, 30b ausgebildet. Die jeweilige Durchgangsöffnung 52, 53 ist durch jeweils ein Gitter oder durch Verstärkungsrippen 54, 55 verschlossen.

In dem Strukturbauteil 20 ist ein weiterer Deckel 56 der Durchladevorrichtung 45 schwenkbar angeordnet. Die Montage der schlaufenförmigen Befestigungsmittel 28a, 28b in den Durchgangsöffnungen 52, 53 erfolgt während des Spritzgussprozesses.

Die Ausbildung/Anordnung der jeweiligen Verstärkungsrippen 54, 55 erfolgt im Spritzgussprozess nach der Anordnung der schlaufenförmigen Befestigungsmittel 28 in der jeweiligen Durchgangsöffnung 52, 53.

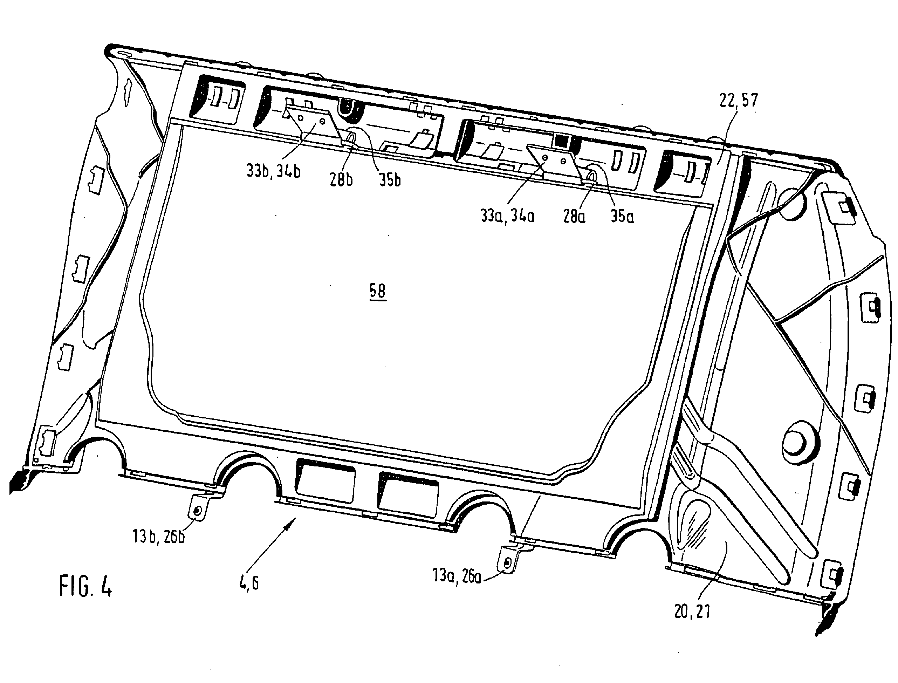

Die Fig. 4 zeigt die Rückseite 6 der Rückenlehne 4 und insbesondere die Rückseite 21 des Strukturbauteils 20, an der das Flächenbauteil 22 befestigt ist. Das Flächenbauteil 22 weist in der in der Fig. 4 gezeigten Ausführungsform einen zweiteiligen Aufbau auf. Das Flächenbauteil 22 ist aus einem Strukturbauteil 57 und einem Energieabsorptionsbauteil 58 aufgebaut.

Die schlaufenförmigen Befestigungsmittel 28 ragen über die Rückseite 6 der Rückenlehne 4 so weit über, so dass der einen Haken bildende, U-förmige Abschnitt 35 des Befestigungsmittels 33 eingehakt werden kann. Ferner sind in der Fig. 4 die Enden 26a, 26b der unteren Befestigungsmittel 13 dargestellt.

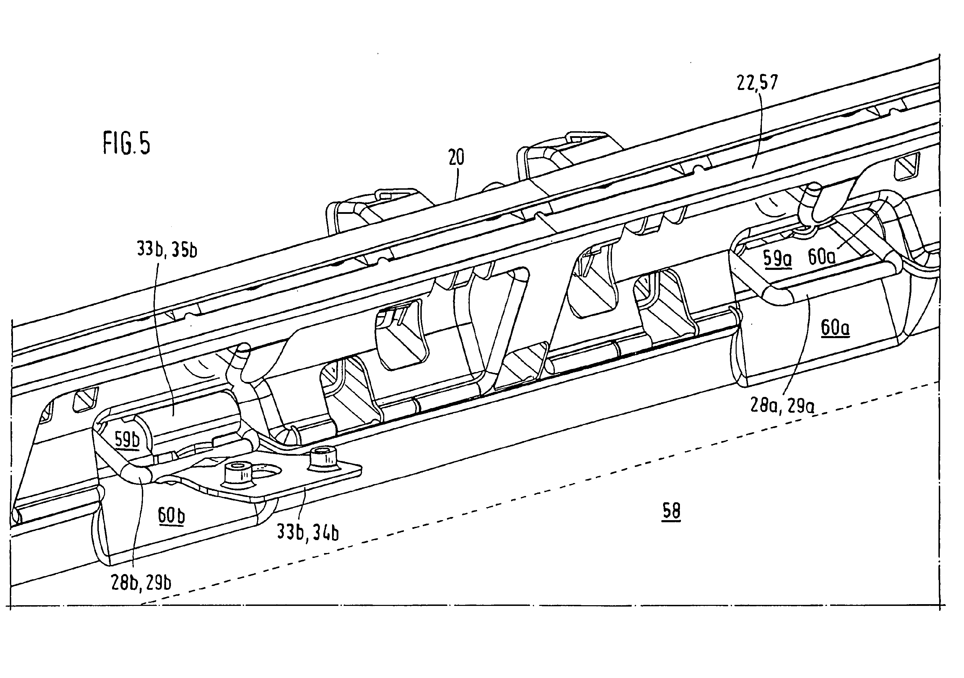

Die Fig. 5 zeigt die beiden schlaufenförmigen Befestigungsmittel 28a und 28b. In der Durchgangsöffnung 59a ist das U-förmige Profil 29a des Befestigungsmittels 28a angeordnet. Aus der Fig. 5 geht ferner hervor, dass in dem Strukturbauteil 57 und in dem Energieabsorptionsbauteil 58 des Flächenbauteils 22 eine Vertiefung 60 ausgebildet ist. Die Vertiefung 60 ist so geformt, dass das jeweilige U-förmige Profil 29 des jeweiligen Befestigungsmittels 28 nicht oder nur gering über das Flächenbauteil 22 in Richtung des Kofferraums 7 übersteht. Bei dem zu dem Befestigungsmittel 28a benachbarten Befestigungsmittel 28b ist das hakenförmige Befestigungsmittel 33b eingehängt.

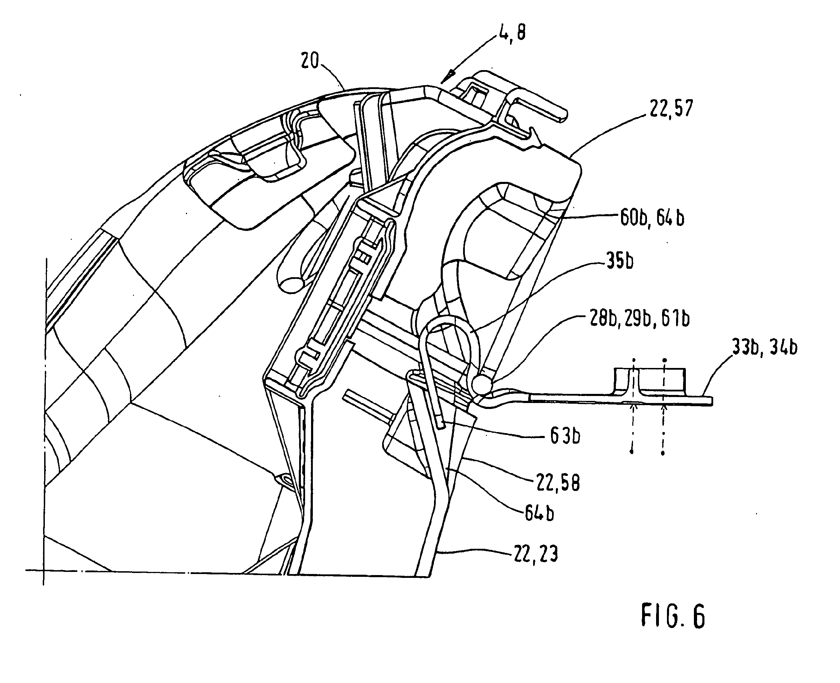

Aus der Schnittdarstellung der Fig. 6 durch den oberen Abschnitt 8 der Rückenlehne 4 längs dem Befestigungsmittel 33b und dem Befestigungsmittel 28b geht hervor, dass ein quer verlaufender Abschnitt 61 des U-förmigen Profils 29 des Befestigungsmittels 28b in Höhe der äußeren Außenfläche 23 außerhalb einer Außenfläche 64 der Vertiefung 60 des Flächenbauteils 20 angeordnet ist.

Der im Querschnitt U-förmige Abschnitt 35 des Befestigungsmittels 33 liegt mit seinem freien Ende 63b an der Außenfläche 64 der Vertiefung 60 an oder befindet sich in einem geringen Abstand zu der Außenfläche 64 der Vertiefung 60. Durch den im Querschnitt U-förmigen Abschnitt 35 wird einerseits die Verriegelung des Befestigungsmittels 28 mit dem Befestigungsmittel 33 hergestellt und zum anderen wird über das freie Ende 63 des Befestigungsmittels 33 eine Fehlmontage oder Nichtverriegelung der beiden Befestigungsmittel 28, 33 erkennbar.

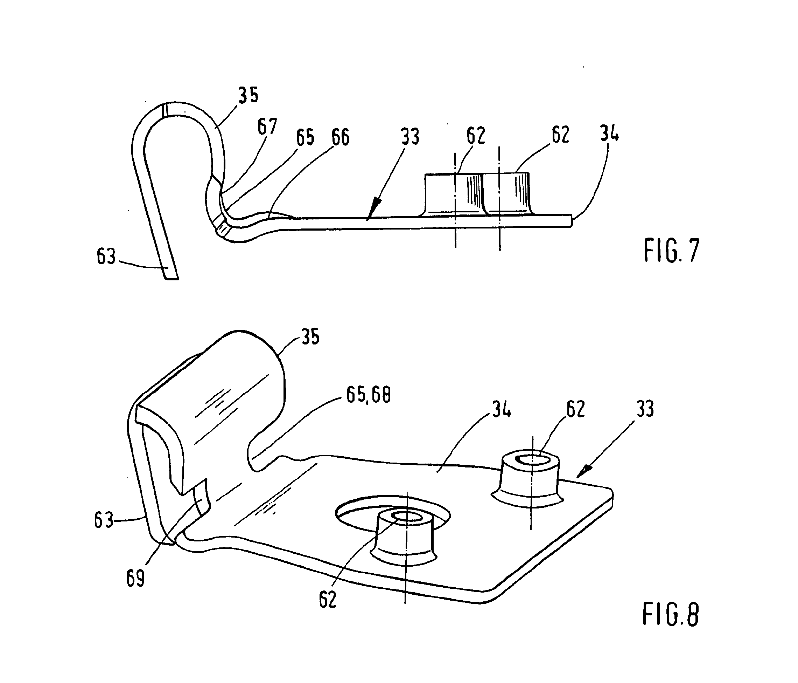

Die perspektivischen Darstellungen der Fig. 7 und 8 zeigen eine Ausführungsform des an der Karosserie 11 angeordneten Befestigungsmittels 33. Insbesondere ist aus den Fig. 7 und 8 die Gestaltung eines Überganges 65 zwischen dem plattenförmigen Abschnitt 34 und dem im Querschnitt U-förmigen Abschnitt 35 erkennbar.

In der Querschnittsansicht der Fig. 7 geht hervor, dass der Übergang 65 eine kreis-segment-förmige Einprägung ist, so dass sich in der gezeigten Ausführungsform jeweils eine geringfügige Absenkung 66 zwischen dem Übergang 65 und dem plattenförmigen Abschnitt 34 und eine geringfügige Absenkung 67 zwischen dem Übergang 65 und dem U-förmigen Abschnitt 35 ergibt.

Aus der perspektivischen Darstellung der Fig. 8 ist erkennbar, dass der Übergang 65 in der gezeigten Ausführungsform zwei Ausschnitte 68 und 69 aufweist. Ferner ist aus der Fig. 7 bekannt, dass sich das freie Ende 63 des U-förmigen Abschnittes 35 bis mindestens in Höhe des plattenförmigen Abschnittes 34 erstreckt. Am plattenförmigen Abschnitt 34 sind ferner Befestigungsvorrichtungen 62 für beispielsweise eine Schraubverbindung erkennbar.

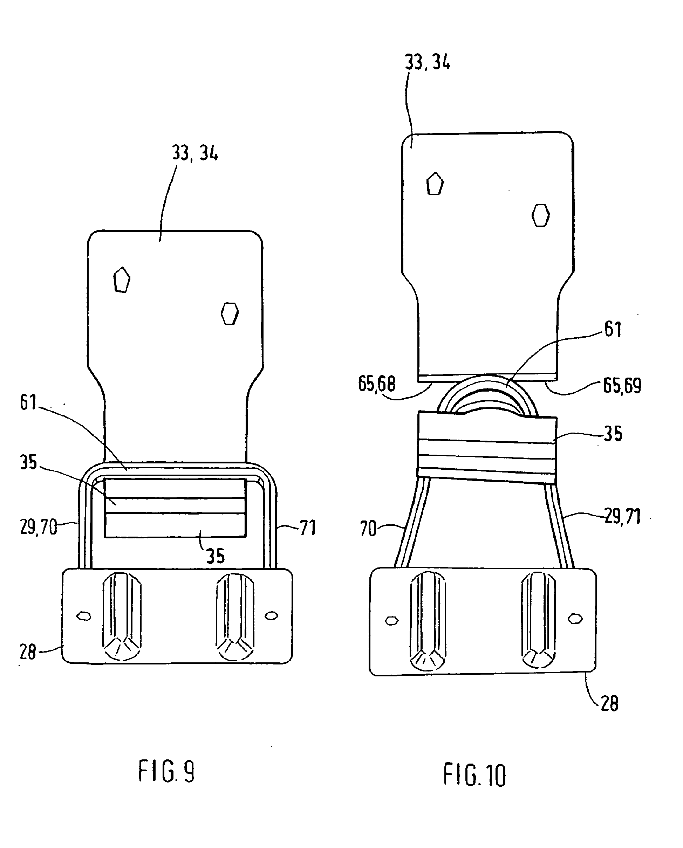

Die Fig. 9 zeigt schematisch das mit dem karosserieseitigen Befestigungsmittel 33 verriegelte, sitzseitige Befestigungsmittel 28 in einem unverformten Zustand. Das U-förmige Profil 29 weist einen im Wesentlichen rechteckförmigen Verlauf auf.

Die Fig. 10 zeigt einen Zustand zwischen den beiden Befestigungsmitteln 28 und 29 nachdem eine entsprechend hohe Kraft auf eine Rückseite 6 der Rückenlehne 4 eingewirkt hat. Das U-förmige oder rechteckförmige Profil 29 ist zu einem V-förmigen Profil verformt. Der quer verlaufende Abschnitt 61 des U-förmigen Profils 29 wurde in die Ausschnitte 68, 69 bewegt.

Dadurch ergibt sich mit dem im Querschnitt U-förmigen Abschnitt 35 eine formschlüssige Verbindung zwischen dem sitzseitigen Befestigungsmittel 28 und dem karosserieseitigen Befestigungsmittel 33, so dass eine Halterung der Rückenlehne 4 auch nach einer Krafteinwirkung gewährleistet ist. Die seitlichen Abschnitte 70, 71 des U-förmigen Profils verlaufen entsprechend der Verformung schräg in Richtung des Überganges 65 des Befestigungsmittels 33.

## Patentansprüche

1. Sitz (1) für ein Kraftfahrzeug (3) mit einer Rückenlehne (4) und einem Sitzteil (5), wobei eine Rückseite (6) der Rückenlehne (4) an Bauteilen (10) der Karosserie (11) befestigt ist, die in Fahrzeugquerrichtung y verlaufen, wobei die Rückenlehne (4) eine Schicht (19) aufweist, die für den Sitzkomfort dient,
wobei die Schicht (19) für den Sitzkomfort der Rückenlehne (4) an einem Strukturbauteil (20) angeordnet ist, wobei sich an das Strukturbauteil (20) ein Flächenbauteil (22) anschließt, das ein Energieabsorptionsbauteil (58) aufweist, wobei sich das Flächenbauteil (22) im Wesentlichen über die Rückseite (6) der Rückenlehne (4) erstreckt und wobei die Befestigung der Rückenlehne (4) an den in Fahrzeugquerrichtung y verlaufenden Bauteilen (10, 14) über mindestens ein oberes Lager (28, 33) und mindestens eine untere Befestigung (13) erfolgt,
wobei die untere Befestigung ein Befestigungsmittel (13) ist, das an der Rückenlehne (4, 20) und an einem Bodenblech (16) der Karosserie (11) befestigt ist,
wobei das obere Lager (28, 33) aus einem schlaufenförmigen Befestigungsmittel (28) und aus einem hakenförmigen Befestigungsmittel (33) besteht, die im montierten Zustand der Rückenlehne (4) an der Karosserie (11) formschlüssig miteinander in Eingriff stehen,
wobei das schlaufenförmige Befestigungsmittel (28) ein U-förmiges oder rechteckförmiges Profil (29) aufweist,
wobei das hakenförmige Befestigungsmittel (33) einen plattenförmigen Abschnitt (34) hat, an dem ein im Querschnitt U-förmiger Abschnitt (35) ausgebildet ist,
wobei zwischen dem plattenförmigen Abschnitt (34) und dem im Querschnitt U-förmigen Abschnitt (35) ein Übergang (65) ausgebildet ist
und
wobei der Übergang (65) zwei seitliche Ausnehmungen (68, 69) aufweist, in denen sich Abschnitte (61, 70, 71) des U-förmigen Profils (29) bei einer Verformung des schlaufenförmigen Befestigungsmittels (28) formschlüssig anlegen.

2. Sitz nach Anspruch 1,
wobei das in Fahrzeugquerrichtung y verlaufende Karosseriebauteil ein oberer Querträger (10) ist.

3. Sitz nach den Ansprüchen 1 oder 2,
wobei an dem im Querschnitt U-förmigen Abschnitt (35) des Befestigungsmittels (33) ein freies Ende (63) ausgebildet ist, das zur Sicherstellung der richtigen Montage dient.

## Claims

1. A seat (1) for a motor vehicle (3) comprising a back rest (4) and a seat part (5), wherein a back (6) of the back rest (4) is fastened to components (10) of the body (11) extending in the transverse direction (y) of the vehicle, wherein the back rest (4) has a covering (19) for comfortable sitting,
wherein the covering (19) for a comfortable back rest (4) is disposed on a structural component (20), wherein the structural component (20) adjoins a planar component (22) having an energy absorption component (58), wherein the planar component (22) extends substantially over the back (6) of the back rest (4) and wherein the back rest (4) is fastened to the components (10, 14) in the transverse direction (y) of the vehicle by at least one top bearing (28, 33) and at least one bottom bearing (13),
wherein the bottom fastening is a fastening means (13) fastened to the back rest (4, 20) and to a floor panel (16) of the body (11),
wherein the top bearing (28, 33) comprises a looped fastening means (28) and a hooked fastening means (33) which engage one another positively when the back rest (4) is mounted on the body (11),
wherein the looped fastening means (28) has a U-shaped or rectangular profile (29),
wherein the hooked fastening means (33) has a plate-shaped portion (34) on which a U-section portion (35) is formed,
wherein a passage (65) is formed between the flat portion (34) and the U-secction portion (35), and
wherein the passage (65) has two lateral recesses (68, 69) in which portions (61, 70, 71) of the U-shaped member (29) positively adjoin when the looped fastening means (28) is deformed.

2. A seat according to claim 1,
wherein the body part extending in the transverse direction (y) of the vehicle is a top transverse bearer (10).

3. A seat according to claim 1 or claim 2,
wherein a free end (63) is formed on the U-section portion (35) of the fastening means (33) in order to ensure correct assembly.

## Revendications

1. Siège (1) pour véhicule à moteur à combustion interne (3) comportant un dossier (4) et une partie de siège (5), la face arrière (6) du dossier (4) étant fixée à des composants (10) de la carrosserie (11) qui s'étendent dans la direction transversale (y) du véhicule, le dossier (4) comportant une couche (19) servant au confort d'assise,
la couche (19) servant au confort d'assise du dossier (4) étant montée sur un composant de structure (20), ce composant de structure (20) étant relié à un composant plan (22) qui comporte un composant d'absorption de l'énergie (58), le composant plan (22) s'étendant essentiellement sur la face arrière (6) du dossier (4) et la fixation du dossier (4) sur les composants (10, 14) s'étendant dans la direction transversale (y) du véhicule s'effectuant par l'intermédiaire d'au moins un support supérieur (28, 33) et d'au moins un moyen de fixation inférieur (13),
le moyen de fixation inférieur étant constitué par un élément de fixation (13) qui est fixé sur le dossier (4, 20) et sur une tôle de fond (16) de la carrosserie (11),
le support supérieur (28, 33) étant constitué par un élément de fixation en forme de boucle (28) et par un élément de fixation (33) en forme de crochet, qui, lorsque le dossier (4) est monté sur la carrosserie (11) viennent en prise l'un avec l'autre par une liaison par la forme, l'élément de fixation en forme de boucle (28) ayant un profil en forme de U ou rectangulaire (29),
l'élément de fixation (33) en forme de crochet comportant un segment (34) en forme de plaquette sur lequel est formé un segment (35) ayant une section en forme de U,
entre le segment (34) en forme de plaquette et le segment (35) ayant une section en forme de U est formée une transition (65), et
la transition (65) comportant deux évidements latéraux (68, 69) dans lesquels s'appliquent par une liaison par la forme des segments (61, 70, 71) du profilé en forme de U (29) lors d'une déformation de l'élément de fixation (28) en forme de boucle.

2. Siège conforme à la revendication 1, dans lequel le composant de carrosserie s'étendant dans la direction transversale (y) du véhicule comporte une poutre transversale supérieure (10).

3. Siège conforme à la revendication 1 ou 2, dans lequel sur le segment (35) ayant une section en forme de U de l'élément de fixation (33) est formée une extrémité libre (63) servant à garantir un montage correct.
